# EUROPEAN PATENT SPECIFICATION

(11) **EP 0 447 932 B1**
(45) Date of publication and mention of the grant of the patent: **09.11.1994**
(21) Application number: 91103795.0
(22) Date of filing: 13.03.1991
(51) Int. Cl.: B29C 65/20

(54) **A welding machine for thermoplastic products**
Schweissmaschine für Gegenstände aus thermoplastischen Kunststoffen
Machine de soudage pour des produits en matériaux thermoplastiques

(30) Priority: 15.03.1990 IT 6718790
(43) Date of publication of application: 25.09.1991
(73) Proprietor: COMIMPORT ITALIA S.R.L., I-10026 Santena (Torino) (IT)
(72) Inventor: Neirotti, Franco, I-10022 Carmagnola (Torino) (IT)
(74) Representative: Lotti, Giorgio

(56) References cited:
- DE-A- 3 005 924
- LU-A- 60 356
- US-A- 4 001 066
- US-A- 4 134 716
- PLASTVERARBEITER vol. 38, no. 5, May 1987, SPEYER, DE pages 39 - 44; E. PECHA:
- 'HOCHWERTIGE SCHWEISSTEILE FÜR DIE AUTOMOBOLINDUSTRIE '
- KUNSTSTOFFE vol. 77, no. 2, February 1987, MÜNCHEN, DE pages 139 - 149; W.BENFER: 'WERKZEUGWECHSELSYSTEME AN SPRITZGIESSMASCHINEN '

## Description

The present invention is generally referred to a welding machine for synthetic material products. Particularly the invention is directed to a welding machine in which it is possible to substitute, simultaneously with the molds, also other tools that are essential for this kind of manufacturing, such as the hot plate.

During welding operations, when components having a complicated shape are coined together in order to obtain the final product with the desired shape, the assembly of the mold requires several slow and laborious operations that need skilled labour with a lot of uneconomical idle time.

The disadvantages may be partially reduced, but with other drawbacks, for instance limiting the mold replacement phase by assigning to single welding units the tusk of joining together fixed components.

It is an object of the present invention to overcome the above mentioned drawbacks by means of a new technological process, using a welding machine that can be flexibly used for several operations, simplifying and accelerating the replacement operations of the fundamental operating members.

It is another object of this invention to disclose a welding machine in which the upper mold, the lower mold and the hot plate form a monolithic unit, without altering the structure of the machine.

This turns to be particularly useful during some operations, such as the replacement of the mold on injection presses for thermoplastic materials or on mechanical push benches or shearing machines.

In particular, this invention discloses a welding machine in which the hot plate can be removed together with the molds that have to be changed.

It is a further object of the present invention to cut down the idle time of the duty cycle; an economical advantage is that the welding machine according to this invention allows to reduce the skilled labour, that may also be not highly qualified. This means that the costs will be reduced and will be competitive, especially from the manufacturing point of view.

For these and other purposes, that will appear more clearly from the following detailed description, this invention proposes to realize a welding machine for thermoplastic products, of the kind comprising a couple of molds suitably shaped so as to follow the shape of the components that have to be welded and that are joined together along one of their edges by interposing a hot plate, characterized in that it is provided with a mold holding frame on which said molds and said hot plate are mounted, so as to form a monolithic unit with said frame; the welding machine having quick locking and unlocking means for the mold-holding frame so as to allow to replace said frame with another frame also provided with a couple of molds and a hot plate.

The welding machine that is the object of the present invention is now going to be described in a preferred embodiment referring to the enclosed drawings, in which:
- fig. 1: is a perspective view of the welding machine according to this invention;
- fig. 2: is a partially sectioned front view of the machine of fig. 1;
- fig. 3: is a corresponding side view according to line III-III of fig. 2.

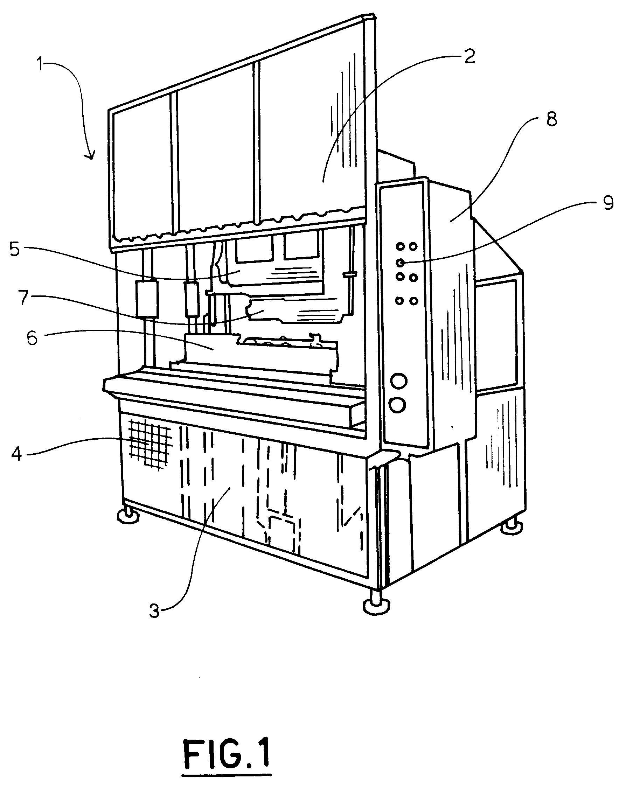

Referring to the above mentioned drawings and limiting the description to the innovating parts and operations thereof, reference number 1 indicates the welding machine as a whole. As shown in fig. 1, the machine 1 has a superior compartment 2 and an inferior compartment 3 with an outer aeration grid 4.

Traditional oleodynamic drive mechanical means with their conduits for blocking and moving are located inside compartments 2 and 3. An upper mold 5 and a lower mold 6 are vertically aligned and located between compartments 2 and 3. Molds 5 and 6 form the mold ad a whole and are mounted on a suitable frame, as described hereinafter. Molds 5 and 6 are suitably shaped according the shape of the two components to be welded, which are indicated with 16 and 17. These ale joined along one of their edges by interposing a hot plate 7.

A control board 8 with a push-buttom panel 9 for the oleodynamic blocking system of compartments 2 and 3 is located on one side of the machine 1.

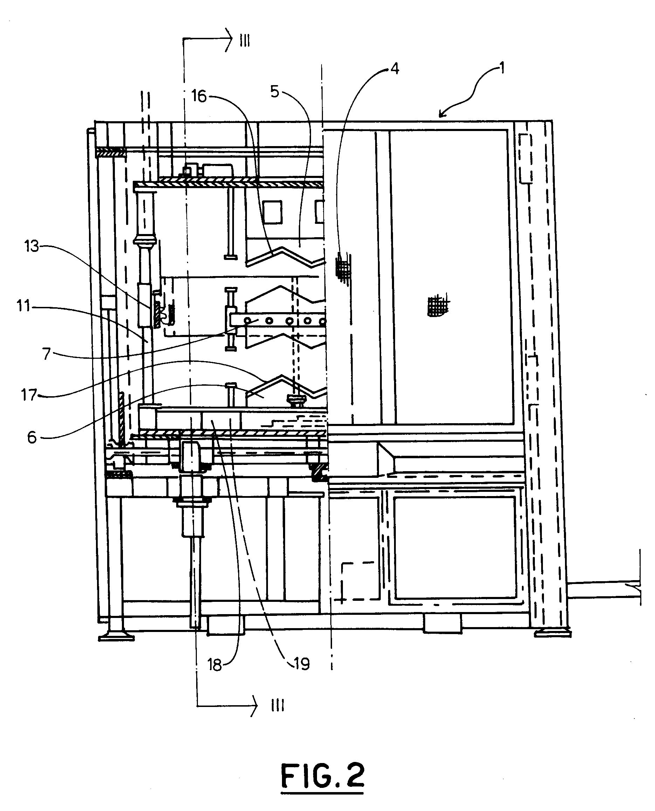

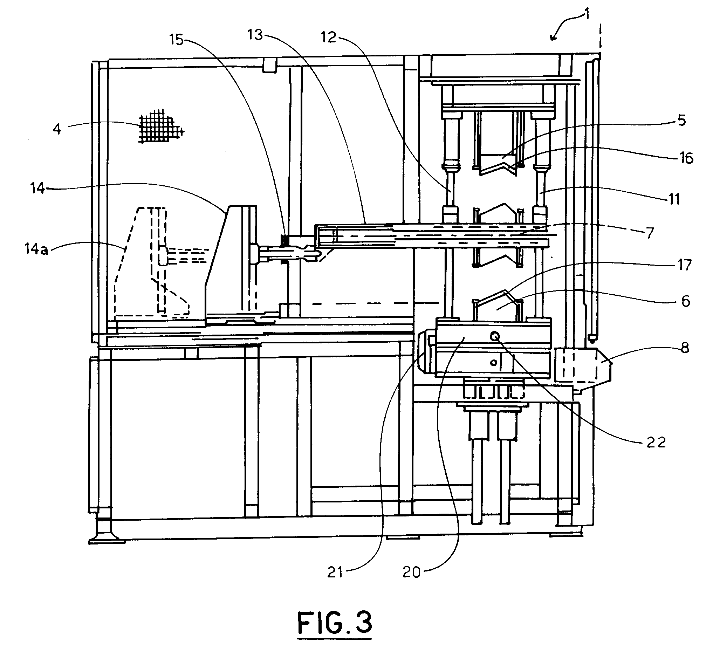

With reference to figs. 2 and 3, molds 5 and 6 are firmly fixed on a mold holder frame, that consists essentially of posts 11 and 12 and of an inferior base 20 and a superior base 23. During the welding operation, the edges of molds 5 and 6 insert their respective heat conductors directly, so as to fuse and weld the components that have to be assembled. The heat conductors are actuated by heating members provided with electric resistors.

Finally all the members that are integral with the frame are binded by a quick locking and unlocking system having quick coupling that are operated by a push-button panel 9 on control board 8.

The hot plate 7 is contained inside a rigid shell 13, which is in turn carried by a trolley 14, horizontally slidable between two positions: operational (continuous line) and retracted (dotted line 14a). The plate 7, that comprises the necessary electric connector (not shown), is binded to the trolley 14 by means of a pin 15 (fig. 3) that can also be substituted by a hydraulic drive cylinder.

According to a first innovating characteristic, as the machine is designed to weld parts of components with various dimensions, like the ones used in motorcar industry such as bumpers, tanks, dashboards, etc., the mold 5-6 has a shape that is made to follow each time the shape, that is often tortuous and complex, of the parts that have to be welded. When a new and different series of parts has to be welded the molds and the hot plate have to be replaced with other molds and plate that suite the new series of components.

To change the molds 5 and 6, the hot plate and the mold-holding frame with which they form a unit, first of all the oleodynamic binding system has a unit, first of all the oleodynamic binding system has to be released; then, the operator has to slip the gripping arms of a lift truck inside openings 18 and 19 of the lower base 20 that is located underneath the mold. In this way the monolithic unit consisting of the mold holding frame, the molds and the hot plate can be removed and substituted in a very short time by components with a different shape.

During the phase in which the new mold is inserted, the hot plate 7 is pre-heated; a set of pins 21 carry out a pre-centering action in which the mold translates, while the final settlement is ensured by further pins 22.

Then, the new mold-holding frame, already provided with molds and hot plate, is fitted in the welding machine by means of a lift truck; finally the whole frame and connected parts are locked up by actuating an oleodynamic control.

In an advantageous embodiment, the quick locking and unlocking couplings can all be actuated simultaneously by operating a single control.
it appears clear that, by using devices that are already known per se, but arranged in an advantageous and innovating way, a production cycle with a great deal of automaticity, speed and safety is realized.

Moreover a considerable and economical reduction of the idle times is obtained, particularly for those regarding the replacement of the molds.

It being understood that the innovating principles and the embodiments may change a lot with respect to the matter disclosed hereinabove in order to gain further economical and functional improvements, particularly for the replacement and operating cycle of the welding machine, within the object of the present invention, as protected by the following claims.

## Claims

1. A welding machine (1) for thermoplastic products, of the kind comprising a couple of molds (5, 6) suitably shaped so as to follow the shape of the components (16, 17) that have to be welded and that are joined together along one of their edges by interposing a hot plate (7), characterized in that it is provided with a mold holding frame on which said molds (5, 6) and said hot plate (7) are mounted, so as to form a monolithic unit with said frame; the welding machine (1) having quick locking and unlocking means for the mold-holding frame so as to allow to replace said frame with another frame also provided with a couple of molds and a hot plate.

2. A machine (1) according to claim 1, characterized in that the quick locking and unlocking means of the mold-holding frame are quick couplings of the oleodynamic and electric controls that can all be locked or unlocked simultaneously by operating a single control.

3. A machine (1) according to claim 1 characterized in that the mold-holding frame has a base (20) provided with openings (18, 19) designed for receiving the gripping arms of a lift truck.

4. A machine (1) according to claim 1 characterized in that the hot plate (7) is carried by a trolley (14), that is able to translate horizontally on the frame of the machine (1), and from which the plate (7) can be released manually.

5. A machine according to claim 1 characterized in that the hot plate (7) of each monolithic unit is heated up to the operating temperature immediately before the mold-holding unit is mounted onto the machine.

## Patentansprüche

1. Schweißmaschine (1) für Thermoplastprodukte folgender Art, die einige passend geformte Formstücke (5, 6) umfaßt, um der Kontur der Bauteile (16, 17) nachzufolgen, die verschweißt werden müssen und die entlang einer ihrer Kanten durch Dazwischenfügen einer Heizplatte (7) zusammengefügt werden, dadurch gekennzeichnet, daß die Schweißmaschine mit einem Formstückhalterahmen versehen ist, auf dem die Formstücke (5, 6) und die Heizplatte (7) befestigt sind, um so mit dem Rahmen eine monolithische Einheit zu bilden; die Schweißmaschine (1) weist schnelle Ver- und Entriegelungsmittel für den Formstückhalterahmen auf, um so einen Austausch des Rahmens mit einem anderen Rahmen zu ermöglichen, der ebenfalls mit einem Paar von Formstücken und einer Heizplatte bestückt ist.

2. Schweißmaschine (1) nach Anspruch 1, dadurch gekennzeichnet, daß die schnellen Ver- und Entriegelungsmittel des Formstückhalterahmens Schnellkupplungen der öldynamischen und elektrischen Steuerung sind, die alle gleichzeitig durch Betätigung eines einzelnen Bedienungsorganes ver- und entriegelt werden können.

3. Schweißmaschine (1) nach Anspruch 1, dadurch gekennzeichnet, daß der Formstückhalterahmen eine Basis (20) aufweist, die mit Öffnungen (18, 19) versehen ist, die zum Aufnehmen der Greiferarme eines Hubgestells vorgesehen sind.

4. Schweißmaschine (1) nach Anspruch 1, dadurch gekennzeichnet, daß die Heizplatte (7) durch einen Transportwagen (14) getragen wird, der in der Lage ist, sich horizontal auf dem Rahmen der Maschine (1) zu verschieben, und von dem die Heizplatte (7) manuell gelöst werden kann.

5. Schweißmaschine (1) nach Anspruch 1, dadurch gekennzeichnet, daß die Heizplatte (7) jeder monolithischen Einheit auf die Betriebstemperatur aufgeheizt wird, unmittelbar bevor die Formstückhalteeinheit auf der Maschine befestigt wird.

## Revendications

1. Machine de soudage pour des produits en matériau thermoplastique du type comprenant une paire de moules (5, 6) conformés de manière adéquate pour suivre la forme des composants (16, 17) qui sont à souder et à réunir ensemble le long de leurs bords en interposant une plaque chaude (7), caractérisée en ce que la machine présente un bâti de support des moules sur lequel lesdits moules (5, 6) et la plaque chaude (7) sont montés de manière à former une unité monolithique avec ledit bâti, la machine de soudage possédant des moyens de blocage et déblocage rapides pour le bâti supportant les moules de manière à permettre de remplacer ce bâti par un autre bâti également équipé d'une paire de moules et d'une plaque chaude.

2. Machine (1) selon la revendication 1, caractérisée en ce que les moyens de blocage et déblocage rapides du bâti de support des moules sont des accouplements rapides à commande électrique et hydraulique qui peuvent tous être verrouillés ou déverrouillés simultanément par une opération de commande unique.

3. Machine (1) selon la revendication 1, caractérisée en ce que le bâti de support des moules possède une base pourvu d'ouvertures (18, 19) destinée à recevoir les bras de manoeuvre d'un chariot élévateur.

4. Machine (1) selon la revendication 1, caractérisée en ce que la plaque chaude (7) est portée par un chariot (14) capable d'être déplacé horizontalement sur le bâti de la machine et duquel la plaque (7) peut être manuellement séparée.

5. Machine selon la revendication 1, caractérisée en ce que la plaque chaude (7) de chaque unité monolithique est élevée à la température de service immédiatement avant que l'unité de support des moules soit montée sur la machine.
